(19) Europäisches Patentamt / European Patent Office / Office européen des brevets

(11) **EP 2 240 891 B1**

(12) **FASCICULE DE BREVET EUROPEEN**

(45) Date de publication et mention
de la délivrance du brevet:
**13.02.2013   Bulletin 2013/07**

(21) Numéro de dépôt: **08865257.3**

(22) Date de dépôt: **12.12.2008**

(51) Int Cl.:
**G06N 3/08** (2006.01)        **G06N 99/00** (2010.01)
**G06F 15/18** (2006.01)

(86) Numéro de dépôt international:
**PCT/FR2008/052288**

(87) Numéro de publication internationale:
**WO 2009/081005 (02.07.2009 Gazette 2009/27)**

(54) **PROCEDES DE MISE A JOUR ET D'APPRENTISSAGE D'UNE CARTE AUTO-ORGANISATRICE**

VERFAHREN ZUR AKTUALISIERUNG UND ZUM LERNEN FÜR EINE SELBSTORGANISIERENDE KARTE

METHODS FOR UPDATING AND TRAINING FOR A SELF-ORGANISING CARD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.12.2007   FR 0759765**

(43) Date de publication de la demande:
**20.10.2010   Bulletin 2010/42**

(73) Titulaire: **Université Paris 13
93430 Villetaneuse (FR)**

(72) Inventeur: **BENNANI, Younes
F-75014 Paris (FR)**

(74) Mandataire: **Domenego, Bertrand
Cabinet Lavoix
2, place d'Estienne d'Orves
75441 Paris Cedex 09 (FR)**

(56) Documents cités:
• **H. H. MUHAMMED: "Unsupervised Fuzzy Clustering Using Weighted Incremental Neural Networks" INTERNATIONAL JOURNAL OF NEURAL SYSTEMS, vol. 14, no. 6, décembre 2004 (2004-12), pages 355-371, XP008089809 Extrait de l'Internet: URL:http://dx.doi.org/ 10.1142/S01290657040 02121>**
• **B. FRITZKE: "Vektorbasierte Neuronale Netze" 1998, SHAKER VERLAG , XP007904356 Extrait de l'Internet: URL:http://pikas.inf.tu-dresden.de/ ~fritzk e/papers/habil.ps.gz> chapitres 7-9**

• **T. YAMAKAWA, K. HORIO, T. TANAKA: "Evaluation-Based Topology Representing Network for Accurate Learning of Self-Organizing Relationship Network" LECTURE NOTES IN COMPUTER SCIENCE, vol. 4232, 3 octobre 2006 (2006-10-03), pages 968-977, XP019046388 Extrait de l'Internet: URL:http://dx.doi.org/ 10.1007/11893028_108 >**
• **K. TASDEMIR, E. MERENYI: "A new cluster validity index for prototype based clustering algorithms based on inter- and intra-cluster density" PROCEEDINGS OF THE 2007 INTERNATIONAL JOINT CONFERENCE ON NEURAL NETWORKS (IJCNN'07), 12 août 2007 (2007-08-12), pages 2205-2211, XP002473624 Extrait de l'Internet: URL:http: //www.ece.rice.edu/~erzsebet/pape rs/Tasdemir-Merenyi-IJCNN-2007.pdf>**
• **K. BENABDESLEM, Y. BENNANI: "Classification et visualisation des données d'usages d'Internet" ACTES DE L'ATELIER "FOUILLE DU WEB" DES 6ÈME JOURNÉES FRANCOPHONES "EXTRACTION ET GESTION DES CONNAISANCES" (FW-EGC'06), 17 janvier 2006 (2006-01-17), pages 29-40, XP002473648 Extrait de l'Internet: URL:http://www.grappa.univ-lille3.fr/~ppre ux/egc2006/actes/fouille-du-web.pdf>**

EP 2 240 891 B1

- T. MANTORO: "User Location and Mobility for Distributed Intelligent Environment" PROCEEDINGS OF THE 5TH INTERNATIONAL CONFERENCE ON UBIQUITOUS COMPUTING (UBICOMP'03), 12 octobre 2003 (2003-10-12), pages 255-256, XP002474251 Extrait de l'Internet: URL:http://www.ubicomp.org/ubicomp2003/adjunct_proceedings/proceedings.pdf>
- G. CABANES, Y. BENNANI: "A Simultaneous Two-Level Clustering Algorithm for Automatic Model Selection" PROCEEDINGS OF THE 6TH INTERNATIONAL CONFERENCE ON MACHINE LEARNING AND APPLICATIONS (ICMLA'07), 13 décembre 2007 (2007-12-13), pages 316-321, XP007904411 Extrait de l'Internet: URL:http://dx.doi.org/10.1109/ICMLA.2007.8 >
- G. CABANES, Y. BENNANI: "A local density-based simultaneous two-level algorithm for topographic clustering" PROCEEDINGS OF THE 2008 IEEE INTERNATIONAL JOINT CONFERENCE ON NEURAL NETWORKS (IJCNN'08), 1 juin 2008 (2008-06-01), pages 1176-1182, XP002530049 Extrait de l'Internet: URL:http://dx.doi.org/10.1109/IJCNN.2008.4633948>
- H. MATSUSHITA, Y. NISHIO: "Self-organizing map considering false neighboring neuron", PROCEEDINGS OF THE 2007 IEEE INTERNATIONAL SYMPOSIUM ON CIRCUITS AND SYSTEMS (ISCAS'07), 27 May 2007 (2007-05-27), pages 1533-1536, XP031181569, DOI: 10.1109/ISCAS.2007.378703

**Description**

La présente invention concerne des cartes auto-organisatrices à liens topologiques valués. Elle concerne aussi un procédé de commande d'un système d'apprentissage automatique utilisant une telle carte auto-organisatrice. Enfin, elle concerne un analyseur de comportements dynamiques d'individus coopérant avec des capteurs de traçabilité comme des étiquettes RF-ID, ou des marqueurs de navigation sur un réseau téléinformatique. Plus particulièrement, le procédé de commande et son système de mise en oeuvre sont destinés à produire une cartographie selon au moins deux dimensions et représentative de l'évolution géographique, et le cas échéant de l'évolution temporelle d'éléments mobiles suivis par la carte auto-organisatrice du système.

En mai 2007, Matsushita et Nishio (actes de ISCAS'07, 1533-1536) décrivirent une carte auto-organisatrice, nommée FNN-SOM pour *False Neighboring Neuron Self Organising Map,* dont l'apprentissage depends à la fois d'un meilleur neurone gagnant et d'un pire neurone gagnant appartenant à un voisinage topologique du premier.

En 2006, Benabdeslem et Bennani (actes de FW-EGC'06, 29-40) décrivirent une version incrémentale de carte auto-organisatrice, nommée e-SOM, dont l'apprentissage permet la classification et la visualisation des données de navigation sur un réseau téléinformatique comme le *Web.*

Dans l'état de la technique, on connaît des systèmes de neurones artificiels connectés selon des grilles bidimensionnelles ou cartes et qui fonctionnent après apprentissage pour reconnaître des formes, ou classifier des caractères dans un ensemble de données. Particulièrement, on pourra se reporter à des documents publiés au nom de KOHONEN intitulé « Self-organising maps », Springer, Berlin 2001 ou encore aux brevets.

Dans cet état de la technique, une carte auto-organisatrice est composée d'un ensemble de neurones artificiels, chaque neurone étant construit sur la base d'une unité de calcul comportant des entrées et au moins une sortie qui est activée en fonction des données présentées à ses entrées. La sortie du neurone est connectée à au moins deux autres neurones voisins, de sorte que l'état de sortie du neurone influe sur le comportement de traitement des neurones avec lequel il est connecté.

Une carte auto-organisatrice doit suivre une étape d'apprentissage qui permet en fonction du type de problème que l'on souhaite résoudre pour une catégorie de données de programmer la sortie des neurones de la carte. Ainsi, pour un jeu de données présenté ultérieurement en entrée, les neurones de certaines zones de la carte auto-organisatrice sont seuls activés de sorte que les données présentées en exploitation après apprentissage révèlent leur organisation. Par exemple, si l'on souhaite reconnaître dans une image la présence d'un disque rouge, il faut d'abord programmer la carte auto-organisatrice lors de sa phase d'apprentissage de sorte que seul un neurone dévolu à cette fin soit activé. Pour cela, on présente comme jeu d'apprentissage une série d'images ne contenant que des disques rouges et on règle les paramètres de contrôle des neurones de la carte auto-organisatrice de sorte que le neurone destiné à marquer la présence d'un disque rouge soit actif. Lorsque, lors de l'exploitation de la carte auto-organisatrice, l'on présente une image quelconque à ses entrées, les seules images contenant au moins un disque rouge activent le neurone de détection de présence d'un disque rouge.

D'une manière générale, les cartes auto-organisatrices, dénommées aussi cartes SOM (en anglais Self-Organising Maps SOM) constituent des outils de classification automatique de données, et particulièrement de grands ensembles de données selon un ou plusieurs critères. Lorsqu'un jeu de données d'entrée est présenté à l'entrée d'une carte SOM, l'apprentissage de la carte aura été préalablement exécuté que lorsque le jeu de données d'entrée contient au moins une classe de données répondant à un critère de classification de données prévu, un groupe de neurones interconnectés de la carte SOM est activé, de sorte qu'une section de représentation de l'état d'activation des neurones de la carte SOM présentera à son utilisateur une représentation dans laquelle la zone de la carte correspondant à la présence de données répondant au critère de classification prévu sera dans une première couleur tandis que les autres zones de représentation de l'état d'activation des neurones de la carte seront dans une autre couleur. Bien entendu, plusieurs zones peuvent être activées selon un ou plusieurs critères de classification.

Or, dans cet état de la technique, notamment dans le cas de données d'entrée correspondant à des localisations géographiques ou à des mouvements détectés dans un espace déterminé, la représentation d'une telle classification n'est pas satisfaisante, notamment parce que la classification appliquée par une telle carte SOM n'est pas efficace.

L'invention apporte remède à cet inconvénient de l'état de la technique. En effet, elle a pour objet une carte auto-organisatrice, comportant un réseau de neurones artificiels interconnectés selon un schéma prédéterminé d'interconnexion avec des poids synaptiques ou vecteur prototype déterminés par apprentissage ainsi qu'il est connu. Selon la caractéristique principale de l'invention, la carte auto-organisatrice comporte de plus une ressource pour déterminer et exploiter une valuation d'au moins un lien d'interconnexion entre au moins deux neurones.

Dans l'état de la technique, on connaît des systèmes composés par une pluralité d'éléments mobiles ou acteurs dont les actions sont a priori non déterminées à l'avance et dont la connaissance des déplacements dans un environnement géographique donné présente une importance considérable. C'est par exemple le cas lorsque l'on cherche à suivre les adresses visitées par des utilisateurs d'un réseau de communication comme un réseau Internet, ou encore lorsque l'on désire connaître les déplacements physiques des mobiles d'un réseau de téléphonie mobile ou plus généralement, les déplacements physiques d'éléments, individuels et mobiles, équipés de balises permettant leur localisation précise, comme des étiquettes radio fréquence de type RF ID.

Le problème à la base de l'invention se trouve dans la grande quantité des données de localisation produites par de tels systèmes et par la redondance entre certaines de ces données. Il en résulte qu'il est très difficile de réaliser un traçage des trajets effectués par chacun des individus ou éléments individuels suivis sur la base des techniques connues. Le procédé de l'invention a pour objet l'apprentissage non supervisé de typologies ou catégories représentées dans des données décrivant le comportement dynamique d'individus dans une population déterminée. On appelle apprentissage non supervisé un apprentissage d'un dispositif comme un réseau de neurones artificiels ou une carte auto organisatrice SOM (pour Self Organisation Map), sur la base d'un ensemble de jeux de données d'entrée non étiquetées (sans connaissances a priori). Chaque jeu de données d'entrée est représentatif d'un caractère ou d'un type destiné à constituer ou à écrire ou à définir une typologie ou catégories représentées dans les données décrivant le comportement dynamique étudié. Le procédé de l'invention permet de découvrir un espace comportementale d'un ensemble de données spatiaux temporelles. Un tel espace préserve la notion de voisinage entre les exemples décrivant le processus à modéliser.

Selon un autre aspect de l'invention, des données spatio-temporelles sont classées en prenant en compte à la fois les positions et les évolutions ou (trajectoires) des individus d'une population déterminée. Le procédé de l'invention permet de déterminer une classification automatique non supervisée sur la base d'un compromis entre les positions et les évolutions. Particulièrement, la classification apportée par le procédé de commande de l'invention permet d'équilibrer les influences des deux types d'information.

Selon un autre aspect de l'invention, le procédé de commande permet de diminuer le nombre des trajectoires observées, sous forme de trajectoires prototypes, initialement décrites dans un ensemble de jeux de données d'entrée, et présentées comme données d'apprentissage à l'entrée d'un réseau de neurones comme une carte auto organisatrice dans un système mettant en oeuvre le procédé de l'invention.

Selon un autre aspect de l'invention, il est possible sur la base du procédé de commande de visualiser les trajectoires sous forme d'une suite d'évolutions des individus d'une population déterminée dans l'espace topologique, ou cartographie, dans lequel ils évoluent. Particulièrement, le nombre de groupes, typologies ou catégories est déterminé automatiquement par le procédé de commande exécuté pendant l'étape d'apprentissage du réseau de neurones utilisé, par exemple une carte auto-organisatrice dans un système de mise en oeuvre du procédé de commande de l'invention.

Dans l'état de la technique, on connaît des solutions permettant de calculer des groupes de jeux de données sans avoir de connaissances a priori au sujet de la structure cachée de ces données.

La classification de tels groupes de données peut être définie comme la partition d'un ensemble d'éléments décrits par plusieurs données en une collection de sous-ensembles mutuellement disjoints.

Par exemple, on utilise des méthodes hiérarchiques et des méthodes de partitionnement de données. Il est par exemple connu d'utiliser une technique de regroupement hiérarchique en séparant des formes dans une hiérarchie en forme d'arbres ou dendrogrammes, construit à partir des formes à rassembler. On trouvera un exemple d'un tel état de la technique dans le document WARD Joe H, « Hierarchical Grouping to Optimize an Objective Function », Journal of the American Statistical Association, 58 (301) : 236 - 244, 1963.

Une méthode efficace de regroupement est la méthode dite des cartes auto-organisatrices ou cartes de Kohonen. Un tel état de la technique est particulièrement décrit dans les documents KOHONEN Teuvo, « Self-organizing Maps », Springer Berlin, 1ere édition 1984 et KOHONEN Teuvo, « Self-organizing maps », Springer, Berlin, 3eme édition 2001.

Une carte auto organisatrice est constituée par un réseau bidimensionnelle ou de neurones artificiels pour cartographier des données d'entrée présentées sous forme d'un vecteur d'entrée présentant un nombre élevé de dimensions en un ensemble de données de sortie représentées dans un espace en général bidimensionnel par une méthode d'apprentissage compétitif et non supervisé.

La présente invention apporte remède aux défauts de l'état de la technique en proposant un procédé de commande permettant une segmentation automatique et simultanée de la carte topologique. La découverte des groupes, typologies ou catégories ou classes, se fait automatiquement en même temps que l'estimation des prototypes. Un tel procédé d'apprentissage permet d'établir une cartographie représentative des évolutions à la fois temporelle et spatiale des individus sur la base d'un ensemble d'observations déterminées.

En effet, elle concerne un procédé de commande d'un réseau de neurones sous forme d'une carte auto-organisatrice en vue de traiter au moins un ensemble de données relatives à des éléments individuels évoluant dans le temps et/ou un espace géométrique. Le procédé consiste en :

- une première étape pour initialiser la carte auto-organisatrice en vue de la solution d'un problème déterminé de classification de données d'entrée sous forme d'un vecteur de forte dimension ;
- une seconde étape de compétition entre neurones de la carte auto-organisatrice sur la base d'au moins un ensemble de données d'entrée; et

- une troisième étape d'adaptation du réseau de neurones sur la base d'au moins un jeu de données d'entrée de façon à produire un jeu de données de sortie représentatives d'une évolution cartographique.

Selon un aspect de l'invention, la première étape d'initialisation comporte les étapes de :

- déterminer la topologie de la carte auto-organisatrice;
- initialiser l'ensemble des poids synaptiques (prototypes) de la carte auto-organisatrice ;
- initialiser à une valeur déterminée chaque connexion topologique (connexion entre neurones) dans la carte auto-organisatrice.
- initialiser à une valeur déterminée la densité associée à chaque neurone de la carte auto-organisatrice.

Selon un autre aspect de l'invention, l'étape d'initialisation de l'ensemble des poids synaptiques de la carte auto organisatrice comporte une étape pour placer l'ensemble des poids synaptiques à une valeur aléatoire dans un intervalle prédéterminée de valeurs d'initialisation des poids synaptiques.

Selon un autre aspect de l'invention, l'étape d'initialisation à une valeur déterminée de chaque connexion topologique consiste à placer l'ensemble des connexions à une valeur initiale nulle.

Selon un autre aspect de l'invention, l'étape d'initialisation à une valeur déterminée de chaque densité associée à chaque neurone consiste à placer l'ensemble des densités à une valeur initiale nulle.

Selon un aspect de l'invention, la seconde étape pour exécuter un apprentissage de la carte auto organisatrice consiste en :

-- une étape pour présenter au moins un exemple d'entrée (choisi aléatoirement parmi les exemples disponibles) à l'entrée de la carte auto organisatrice ;
-- une étape pour détecter le premier vecteur prototype de la carte auto organisatrice le plus proche de l'exemple d'entrée présenté à l'entrée de la carte auto organisatrice ; et
-- une étape pour choisir un second vecteur prototype de la carte auto organisatrice, différent du premier, le plus proche de l'exemple d'entrée présenté à l'entrée de la carte auto organisatrice.

Selon un aspect de l'invention, la troisième étape d'adaptation des paramètres de la carte auto-organisatrice consiste en :

-- une étape de mise à jour des prototypes ;
-- une étape de mise à jour des connexions topologiques; et
-- une étape de mise à jour des densités associées à chaque neurone de la carte auto-organisatrice.

Selon un aspect de l'invention, l'étape de mise à jour des prototypes consiste en la mise en oeuvre d'une règle d'adaptation de la forme :

$$w^{(i)}(t) = w^{(i)}(t-1) - \varepsilon(t) \times K_{i,u^*(x^{(k)})} \times (w^{(i)}(t-1) - x^{(k)})$$

dans laquelle :

$w^{(i)}(t)$ et $w^{(i)}(t-1)$ sont les vecteurs prototypes de l'état antérieur t-1 de la carte auto-organisatrice et de l'état de mise à jour t ;
$x^{(k)}$ est le k-ième exemple d'apprentissage lors de l'étape d'apprentissage t ;
$u^*(x^{(k)})$ représente le neurone ayant le vecteur de poids synaptique le plus proche de l'exemple d'apprentissage $x^{(k)}$ ;

$\square(t)$ est une fonction pour le contrôle de la convergence de l'algorithme d'apprentissage à l'instant t ; et $K_{i,u^*(x^{(k)})}$

est une fonction noyau de voisinage pour exécuter une régularisation et une pondération de distances entre neurones.

Selon un autre aspect de l'invention, la fonction noyau de voisinage est définie par une relation de la forme :

$$K_{i,j} = \frac{1}{\lambda(t)} \times e^{-\frac{d_1^2(i,j)}{\lambda^2(t)}}$$

dans laquelle :

le paramètre $\square$ (lambda) est déterminé de manière à effectuer une régularisation et $d_1$ (i,j) est la distance entre le neurone i et le neurone j sur la carte.

Selon un autre aspect de l'invention, la mise à jour des connexions topologiques partant du premier meilleur neurone gagnant u* suit les règles d'adaptation suivantes :

$$v_{u^*,u^{**}}(t) = v_{u^*,u^{**}}(t-1) + r(t) \times \left| \aleph(u^*) \right| \; ;$$

$$v_{u^*,i}(t) = v_{u^*,i}(t-1) - r(t) \times \left| \aleph(u^*) \right| : \forall i \in \aleph(u^*), i \neq u^{**}$$

dans lesquelles :

u* est le premier meilleur neurone gagnant (le plus proche de $x^{(k)}$ ):

$$u^*(x^{(k)}) = Arg \min_{1 \leq i \leq M} \left\| x^{(k)} - w^{(i)} \right\|^2$$

u** est le second meilleur neurone gagnant (le second plus proche de $x^{(k)}$):

$$u^{**}(x^{(k)}) = Arg \min_{1 \leq i \leq M, i \neq u^*} \left\| x^{(k)} - w^{(i)} \right\|^2$$

$\aleph(u^*)$ est l'ensemble des neurones voisins de u* et $|\aleph(u^*)|$ est le nombre de voisins ;
la fonction r(t) étant définie par:

$$r(t) = \frac{1}{1 + e^{(-\frac{\alpha t}{t_{max}} + \beta)}}$$

les paramètres $\square$ (alpha) et $\square$ (beta) étant déterminés de manière à effectuer une régularisation de l'adaptation des connexions topologiques.

Selon un autre aspect de l'invention, la mise à jour de la densité locale $D^{(i)}$ associée à chaque neurone i de la carte suit la règle d'adaptation suivante :

$$D^{(i)}(t) = D^{(i)}(t-1) + r(t) \times e^{\frac{\left\| x^{(k)} - w^{(i)}(t) \right\|^2}{2\lambda^2(t)}}$$

le paramètre ☐ (lambda) étant déterminé de manière à effectuer une régularisation des densités.

Selon un autre aspect de l'invention, à la fin de l'apprentissage, les neurones connectés via des connexions topologiques positives définissent les groupes ou les typologies ou les classes. La segmentation (découpage de la carte topologique) est par conséquent faite automatiquement durant l'apprentissage et sans supervision.

Selon un autre aspect de l'invention, il comporte de plus une étape de raffinement de la segmentation effectuée sur la base de la détection des maximas locaux de densités locales.

Selon un autre aspect de l'invention, le procédé de commande comporte de plus une étape de détermination d'une nouvelle segmentation (plus fine) sur la base d'une agrégation des neurones autour de pics de densité en suivant un gradient de densité ascendant le long des connexions topologiques reliant deux neurones d'un même groupe.

Selon un autre aspect de l'invention, le procédé de commande comporte de plus une étape de réduction du bruit par agrégation de sous-groupes de neurones de la carte auto-organisatrice appartenant à une même catégorie de densités supérieures à un seuil déterminé.

L'invention concerne aussi un système pour mettre en oeuvre le procédé de commande de l'invention ou analyseur de comportements dynamiques qui comporte :

- une carte auto-organisatrice ;
- au moins un jeu d'ensembles de données d'entrée ;
- au moins une mémoire de valeurs de pertinence de la connexion topologique entre une unité meilleure gagnante de la carte auto-organisatrice et au moins une autre unité de la carte ;
- un organe de visualisation des unités activées de la carte auto-organisatrice ; et
- un organe de présentation d'un ensemble de données représentatives du comportement d'une population déterminée dans une cartographie ;

de sorte qu'après une étape d'apprentissage, l'organe de visualisation des unités activées de la carte auto-organisatrice soit une représentation de la cartographie et/ou de la trajectographie des individus de ladite population déterminée.

D'autres caractéristiques et avantages de la présente invention seront mieux compris à l'aide de la description et des figures annexées, parmi lesquelles :

- les figures 1 à 4 représentent des organigrammes de l'étape d'apprentissage du procédé de l'invention ;
- la figure 5 représente une partie d'une carte auto-organisatrice mise en oeuvre dans le procédé de l'invention;
- la figure 6 représente un organigramme d'une étape supplémentaire de raffinement de la segmentation;
- la figure 7 représente un organigramme d'une étape de détermination d'une segmentation supplémentaire ;
- la figure 8 représente un organigramme d'une étape de filtrage du bruit de réduction en catégories, typologies ou classes ;
- la figure 9 représente un mode de réalisation d'une carte auto-organisatrice selon un premier mode de réalisation de l'invention ;
- la figure 10 représente un détail d'organisation de la carte auto-organisatrice du mode de réalisation de la figure 9 ;
- la figure 11 représente une carte auto-organisatrice selon un second mode de réalisation de l'invention ;
- la figure 12 représente une visualisation du résultat de la classification opérée avec la carte auto-organisatrice et le procédé de commande de l'invention comparée au résultat d'une classification opérée sur les modes données d'entrée au moyen d'une carte auto-organisatrice de l'état de la technique ;

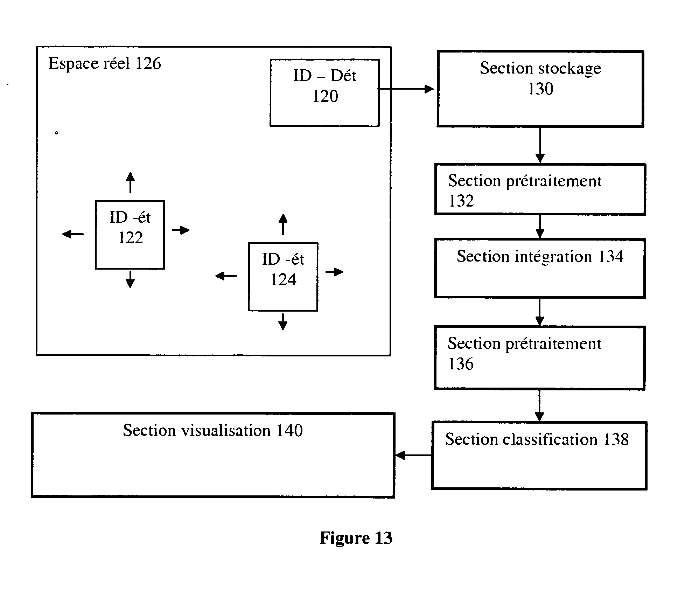

- la figure 13 représente un mode de réalisation d'une application de la carte auto-organisatrice et de son procédé de commande à la visualisation des données de position et/ou la visualisation des données de trajectoires d'au moins un mobile équipé d'une étiquette RF-ID ; et

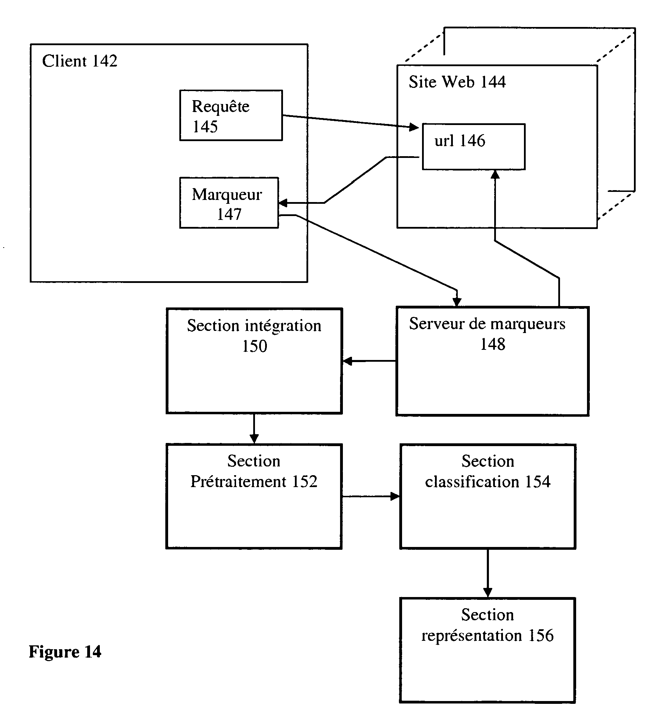

- la figure 14 représente un mode de réalisation d'une application de la carte auto-organisatrice et de son procédé de commande à la visualisation des données de consultation et/ou la visualisation des données de navigation d'au moins un client WEB équipé de traceurs.

Il existe de nombreux procédés permettant de regrouper des données d'entrée en groupes de données homogènes par rapport à un critère de classification déterminé. Cependant, les solutions connues qui ont été rappelées ci dessus ne permettent pas de réaliser un partitionnement automatique (sans fixer a priori le nombre de groupes) des données en groupes homogènes lorsque que les données présentent une dimension trop élevée. Pour réaliser des cartes de regroupement de données dans le cadre de la théorie des cartes auto-organisatrices SOM, il est connu d'utiliser des procédés permettant de réduire le nombre d'exemples de l'ensemble de données d'entrée sur la base de la densité et de la distance entre points représentatifs de ces données. Dans la technique de regroupement de données à deux niveaux à base des cartes auto-organisatrices SOM, on combine la réduction de dimensions et l'apprentissage rapide dans un premier niveau pour construire un espace sectoriel de dimensions réduites (composé uniquement des prototypes). Puis, on applique une autre méthode de regroupement de données dans ce nouvel espace pour produire un ensemble final de groupes de données dans le dit second niveau. Bien que les procédés de regroupement sur deux niveaux soit plus intéressants que les procédés de réduction de dimensions par allongement du temps de traitement et même s'ils permettent une interprétation visuelle des résultats de traitement, la segmentation de données obtenue par la carte auto-organisatrice SOM n'est pas optimale puisqu'une partie de l'information est perdue pendant la première étape de réduction de la dimension (réduction du nombre d'exemples). De plus, la séparation en deux étapes n'est pas adaptée à une segmentation dynamique et des données qui évoluent dans le temps.

Dans l'état de la technique, lorsqu'on utilise une carte auto-organisatrice de type Kohonen, une cellule de sortie est activée et lorsqu'une observation est reconnue dans une couche de compétition, on désactive les autres cellules et on renforce la seule cellule de sortie activée. Ainsi qu'il est connu dans la technique des cartes auto organisatrices, chaque cellule est occupée par un neurone artificiel qui est associé à un ensemble déterminé de valeurs d'entrée ainsi qu'à un ensemble déterminé de paramètres multiplicatifs. Par ailleurs, un voisinage de chaque cellule ou neurone de sortie est déterminé de sorte que l'activation d'un neurone puisse influer sur les paramètres multiplicatifs et ou sur l'état d'activation des cellules ou neurones du voisinage appartenant aux neurones sur lequel le voisinage est entré. Dans le cas où on détermine la désactivation des neurones du voisinage du neurone activé, on utilise une règle du tout gagnant («Winner Takes all »). En pratique, dans une zone déterminée de la carte auto organisatrice, les neurones sont spécialisés dans la reconnaissance d'une catégorie particulière d'observation de données d'entrée de sorte que les données d'entrée répondant à un critère particulier de classement de classification ont tendance à activer une zone particulière de la carte auto organisatrice qui applique une règle du tout gagnant.

Une carte auto organisatrice SOM consiste en une couche à deux dimensions de neurones artificiels qui sont connectés chacun à n données d'entrée via n poids de connexion, ainsi qu'à leurs neurones voisins par des liens topologiques.

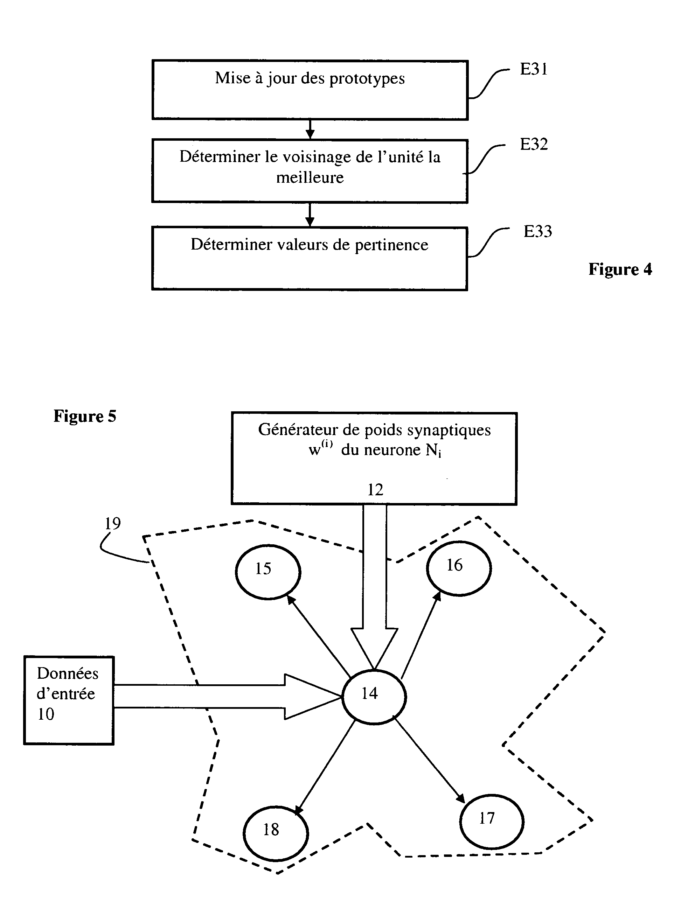

C'est ce qui a été représenté à la figure 5 dans laquelle on a représenté une partie 19 d'une carte auto organisatrice contenant un neurone arbitraire 14 connecté par des liaisons convenables à une pluralité de neurones constituant le voisinage du neurone arbitraire 14, par exemple quatre neurones 15 -- 18. Chaque neurone de la carte auto organisatrice est connecté par des liaisons convenables à un ensemble de données d'entrée 10 et à un générateur de poids synaptiques 12. Ainsi qu'il est connu, la borne de sortie s du neurone arbitraire génère un signal de sortie établi en fonction des données d'entrées $e_i$ présentées par l'ensemble de données d'entrée 10 et des poids synaptiques $w_i$ présentés par le générateur de poids synaptiques 12.

Ainsi qu'il est connu, l'étape d'apprentissage d'une carte auto organisatrice consiste à déterminer un ensemble de poids synaptiques aléatoires aux neurones de la carte auto-organisatrice, et un jeu de P ensembles de données d'entrée, chacun ensemble de données d'entrée présentant un caractère ou de classification déterminé. Ainsi, l'ensemble de données d'entrée $E_p$ est construit de manière à ne contenir que les données d'entrée présentant le caractère de classification $C_p$. On cherche alors à déterminer les poids synaptiques des neurones de la carte auto-organisatrice de sorte que une région déterminée $R_p$ de la carte voit ses neurones ou cellules activés.

Après l'étape d'apprentissage, lorsque la carte auto-organisatrice reçoit un ensemble arbitraire de données, E, si cet ensemble de données d'entrée présente le caractère $C_{p1}$ de classification et le caractère $C_{p2}$, seules les deux régions correspondantes $R_{p1}$ et $P_{p2}$ de la carte auto-organisatrice sont actives et la détection de ces deux régions actives assure la reconnaissance des caractères $C_{p1}$ et $C_{p2}$ dans l'ensemble de données d'entrée E présenté à l'entrée de la carte auto-organisatrice.

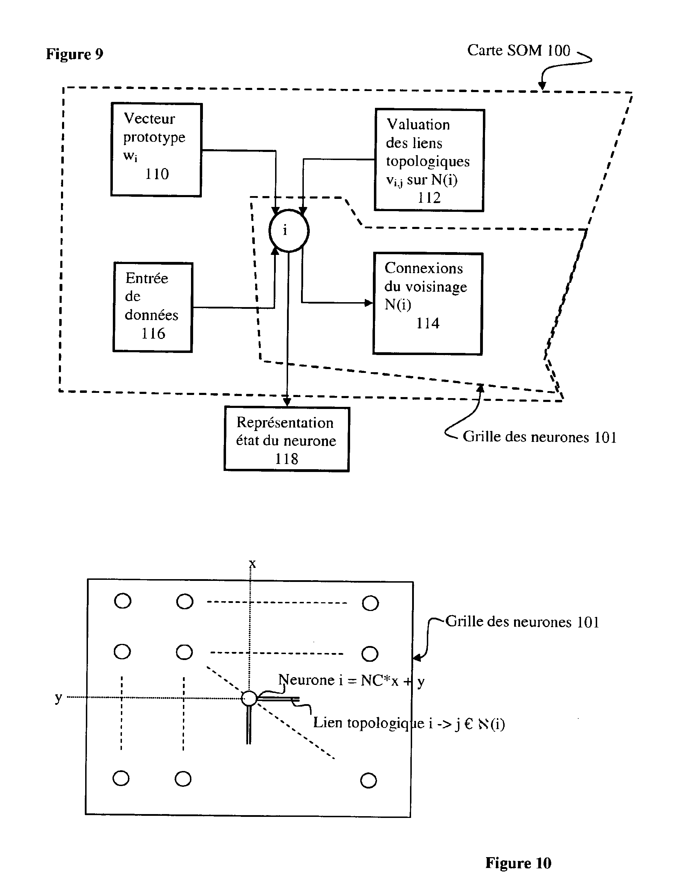

Or, ainsi qu'on l'a rappelé dans le préambule de la présente description, les neurones des cartes auto-organisatrices de l'état de la technique ici rappelé ne permettent pas de tenir compte directement des distances topologiques entre les neurones de la carte lors de son auto-organisation. Il en résulte notamment que la carte auto-organisatrice de l'état de la technique se « déforme » de manière non directement liée à sa topologie lorsqu'elle s'adapte aux données qui lui sont présentées en entrée. L'invention dans un premier mode de réalisation fournit un moyen pour résoudre ce problème. A la figure 9, on a représenté un tel mode de réalisation. La carte auto-organisatrice 100 comporte une grille de neurones artificiels 101 dont seul le neurone « i » a été représenté. Ainsi qu'il est connu, le neurone « i » coopère avec une ressource 110 de la carte SOM 100 dans laquelle sont maintenus et mis à jour lors de l'apprentissage notamment, les vecteurs prototypes $w^{(i)}$ qui correspondent aux poids synaptiques de l'opérateur MAC (non représenté) du neurone « i ». Il coopère aussi avec une ressource 116 d'entrée de données, sur laquelle on présente les jeux d'essai qui permettent ainsi qu'il sera décrit lors de la description de l'étape d'apprentissage du procédé de commande de l'invention à modifier le vecteur prototype et d'autres paramètres de façon à assurer la réponse programmée du neurone « i » à un genre de données répondant à un critère de classification déterminée. Le neurone « i » ainsi qu'il est connu coopère ensuite avec une ressource 114 gérant la connexion topologique du neurone « i » avec les neurones d'un voisinage N(i) du neurone « i ». Un tel voisinage, aussi noté $\aleph$ dans ce qui suit, est déterminé sur la base d'une fonction de distance entre neurones choisie lors de la conception de la carte. Une telle fonction de distance permet notamment, lorsqu'un jeu de données d'entrée est présenté à la carte auto-organisatrice de déterminer que deux neurones sont plus ou moins proches l'un de l'autre par rapport à d'autres neurones. Ainsi le voisinage d'un neurone déterminé sera t'il constitué par l'ensemble des autres neurones qui se trouvent à une distance de ce neurone déterminé inférieure à un seuil de voisinage déterminé.

La carte auto-organisatrice du premier mode de réalisation, comporte de plus une ressource 112 qui maintient et met à jour lors de l'apprentissage notamment, des valuations $v_{ij}$ des liens topologiques entre le neurone « i » et n'importe quel neurone « j » appartenant au voisinage N(i) déterminé par la ressource de connexion 114. Ainsi qu'il sera mieux compris plus loin lors de l'exposé de l'étape d'apprentissage du procédé de commande de l'invention, la valuation $v_{ij}$ permet de déterminer une pertinence de la liaison entre le neurone « i » et le neurone « j » de son voisinage. Ce paramètre permet de « forcer » la déformation de la grille 101 des neurones de la carte 100 lorsque l'on cherche à l'auto-organiser sur un jeu de données d'entrée 116. Selon une caractéristique de l'invention, la valuation $v_{ij}$ de la liaison topologique entre le neurone « i » et le neurone « j » est d'autant plus élevée que les deux neurones sont plus proches l'un de l'autre au sens de la fonction de distance choisie.

A la figure 10, on a représenté un détail de la grille 101 de neurones de la figure 98 dans laquelle les neurones sont répartis dans une grille carrée, le neurone « i » à l'intersection de la colonne x et de la ligne y étant relié par un lien topologique i vers le neurone j du voisinage N(i) du neurone « i ». Un autre lien non référencé vertical a été représenté. Bien entendu, l'arrangement des neurones peut prendre toute grille à plusieurs niveaux, en volume, selon des mailles triangle, rectangle ou polygonale. De plus, le neurone « i » peut aussi être connecté à ses plus proches voisins, à certains d'entre eux ou à d'autres plus éloignés, selon ce qui a été programmé dans la ressource 114 (Figure 9) de connexion du voisinage N(i).

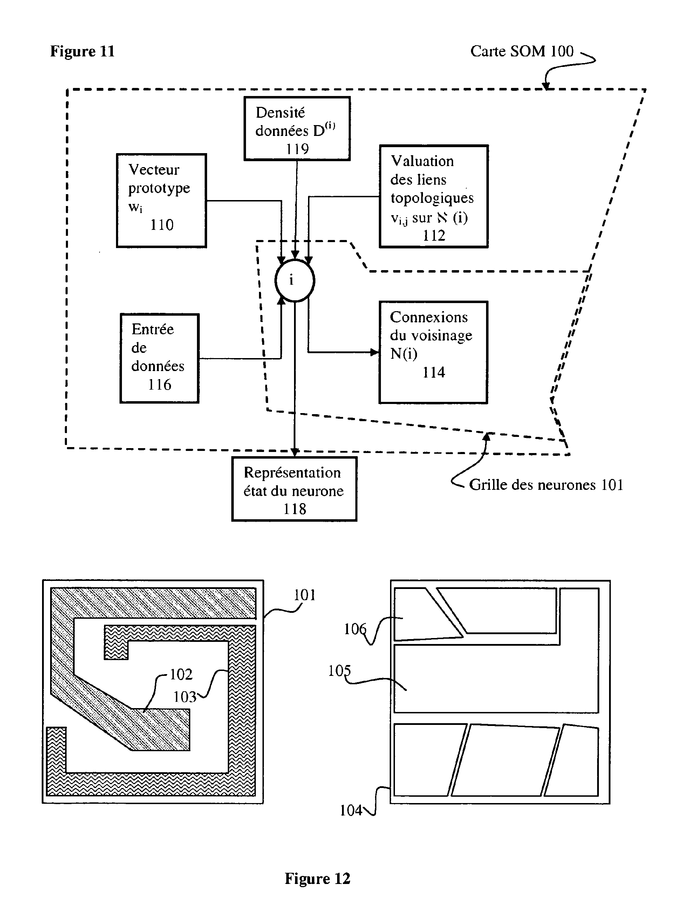

A la figure 11, on a représenté un second mode de réalisation d'une carte auto-organisatrice selon l'invention. A la figure 11, les mêmes éléments que ceux de la figure 9 ou 10 portent les mêmes numéros de référence et ne seront pas plus décrits. La carte auto-organisatrice du second mode de réalisation reprend toutes les ressources de la carte du premier mode. S'y ajoute une ressource 119 qui maintient et met à jour lors de l'apprentissage notamment, des coefficients de données dits de densité locale $D^{(i)}$, chacun associé au neurone courant « i », qui permettent de compter le nombre de données du jeu de données d'entrée 116 qui sont les plus en relation avec le neurone « i ». Une telle donnée permet notamment de débruiter l'association d'un neurone à des données appartenant à une classe très voisine des données qui lui sont les mieux adaptées.

On va maintenant écrire l'étape d'apprentissage du procédé de commande d'une carte auto-organisatrice selon l'invention. L'ensemble de données d'entraînement ou d'apprentissage est utilisé pour organiser les cartes auto organisatrices par des contraintes topologiques se trouvant dans l'espace des données d'entrée. Ainsi, une association ou contrainte topologique dans l'espace d'entrée qui se trouve proche d'une première contrainte topologique activant une première unité de la carte auto organisatrice activera une seconde unité de la carte auto organisatrice proche de la première unité activée. Il est ainsi possible par exemple de représenter la relation géographique de contraintes topologiques de l'espace d'entrée par des unités activées dans des régions localisées de la carte auto-organisatrice, ce qui permet de visualiser directement la position géographique d'une contrainte topologique dans l'espace d'entrée sur l'état d'activation des unités de la carte auto organisatrice.

Chaque neurone gagnant met à jour son vecteur référence (prototype) des poids synaptiques, ce qui le rend plus sensible pour toute représentation ultérieure de ce genre de données d'entrée.

Pour atteindre une cartographie topologique des caractéristiques de classification géographique contenues dans des données d'entrée, les neurones du voisinage du neurone gagnant mettent à jour leur propre vecteur de référence en fonction de leurs distances au neurone gagnant, en fonction d'une fonction de voisinage déterminée comme une fonction de voisinage calculée selon une Gaussienne radiale symétrique.

Selon l'invention, on associe à chaque connexion topologique de voisinage entre un neurone gagnant et un neurone dans son voisinage une valuation topologique ou valeur indicatrice de la pertinence du neurone connecté pour le type de classification auquel la carte auto organisatrice est prévue. Cette connexion topologique de voisinage sera favorisée par une augmentation de sa valeur indicatrice de pertinence de connexion tandis que toutes les autres connexions topologiques de voisinage du voisinage du neurone d'alliances seront défavorisées par une réduction de la valeur indicatrice de pertinence de connexion de chacun des autres neurones appartenant au voisinage du neurone gagnant.

Selon un autre aspect de l'invention, on associe à chaque neurone de la carte auto-organisatrice un second paramètre supplémentaire, dénommé densité du neurone, dans lequel est enregistré le nombre de données d'entrée qui sont associées au neurone.

À la fin de l'étape d'apprentissage, une région de cellules interconnectées constituera ainsi une image artificielle du sous-groupe des données d'entrée présentant le caractère de classification déterminé associé à cette région d'une part et, dans le cas où ce caractère de classification est en relation avec une caractéristique géographique contenue dans les données d'entrée, l'image artificielle du sous-groupe constitué par la région de cellules interconnectées constituera une réplique de la géographie constitutive des données d'entrée, d'autre part.

Selon l'invention, l'étape d'apprentissage du procédé de commande consiste à :

-- augmenter la densité associée à chaque neurone des deux neurones les plus sensibles à un caractère déterminé dans les données d'entrée, les neurones étant représentés par les vecteurs prototype les plus proches de l'ensemble de données d'entrée présenté à l'entrée de la carte auto organisatrice ;

-- augmenter la valeur de la connexion entre les deux neurones les plus sensibles à l'ensemble de données d'entrée présentée à l'entrée de la carte auto organisatrice ;

-- mettre à jour les vecteurs prototype, c'est-à-dire, les adapter.

Cet état d'apprentissage est répété jusqu'à la stabilisation des prototypes.

On va maintenant décrire une étape permettant de déterminer le voisinage d'un neurone gagnant. On utilise un procédé d'apprentissage connexionniste basé sur la minimisation d'une fonction de coût. Dans un mode particulier de réalisation, on utilise une étape de calcul d'un gradient, la fonction de coût étant définie par

$$\widetilde{C}(w) = \frac{1}{N} \sum_{k=1}^{N} \sum_{j=1}^{M} K_{j,u^*(x^{(k)})} \times \left\| w^{(j)} - x^{(k)} \right\|^2$$

dans laquelle N représente le nombre d'échantillons de données d'entrée d'apprentissage, M le nombre de neurones dans la carte auto organisatrice, $u^*(x^{(k)})$ représente le neurone ayant le vecteur de poids synaptique le plus proche de l'exemple d'apprentissage $x^{(k)}$ et $K_{ij}$ est une fonction noyau qui peut être déterminée, dans un mode particulier de réalisation, par une relation de la forme :

$$K_{i,j} = \frac{1}{\lambda(t)} \times e^{-\frac{d_l^2(i,j)}{\lambda^2(t)}}$$

dans laquelle la fonction $\lambda(t)$ est une fonction de température modélisant l'étendue du voisinage topologique qui est définie, dans un mode particulier de réalisation, par une relation de la forme :

$$\lambda(t) = \lambda_i \left(\frac{\lambda_f}{\lambda_i}\right)^{\frac{t}{t_{max}}}$$

dans laquelle $\lambda_i$ et $\lambda_f$ représentent les températures initiale et finale, $t_{max}$ est le nombre maximal alloué au cours du temps, c'est-à-dire le nombre d'itérations pour l'échantillon d'apprentissage x. $d_l(i,j)$ est une distance définie entre les deux neurones i et j dans la carte auto organisatrice avec les coordonnées respectives : (k, m) pour le neurone i et (r, s) pour le neurone j. Dans un mode particulier de réalisation du procédé d'intention, on utilise une relation de distance de la forme dite « distance de Manhattan » :

$$d_l(i, j) = |r - k| + |s - m|.$$

Selon le procédé de l'invention, chaque connexion topologique est associée à une valeur réelle de pertinence v du couple constitué par un neurone de voisinage connecté sur le neurone gagnant. La valeur de cette liaison v est adaptée pendant l'étape d'apprentissage. Dans un mode particulier de réalisation, chaque neurone étant considéré comme un noeud d'un graphe topologique, une arête particulière du graphe topologique appartient à une triangulation de Delaunay correspondant à l'ensemble ou jeu de données d'entrée d'apprentissage.

Le procédé de l'invention comporte donc une étape d'apprentissage qui présente elle-même trois étapes composantes, à savoir :

- une étape d'initialisation de la carte auto-organisatrice SOM ;
- une étape de compétition destinée à déterminer des neurones gagnants pour un ensemble déterminé de contraintes topologiques sur un espace de données d'entrée ; et

- une étape d'adaptation destinée à trouver une valeur optimale pour les valuations topologiques entre les neurones gagnants et leurs plus proches voisins.

Préférentiellement, à l'issue de l'étape d'adaptation est réalisé un test de stabilité des valeurs déterminées lors de l'étape d'adaptation et/ou de l'étape de compétition de sorte que si les valeurs déterminées restent stables, l'étape d'apprentissage est terminée et sinon, le contrôle est repassé à l'étape d'adaptation.

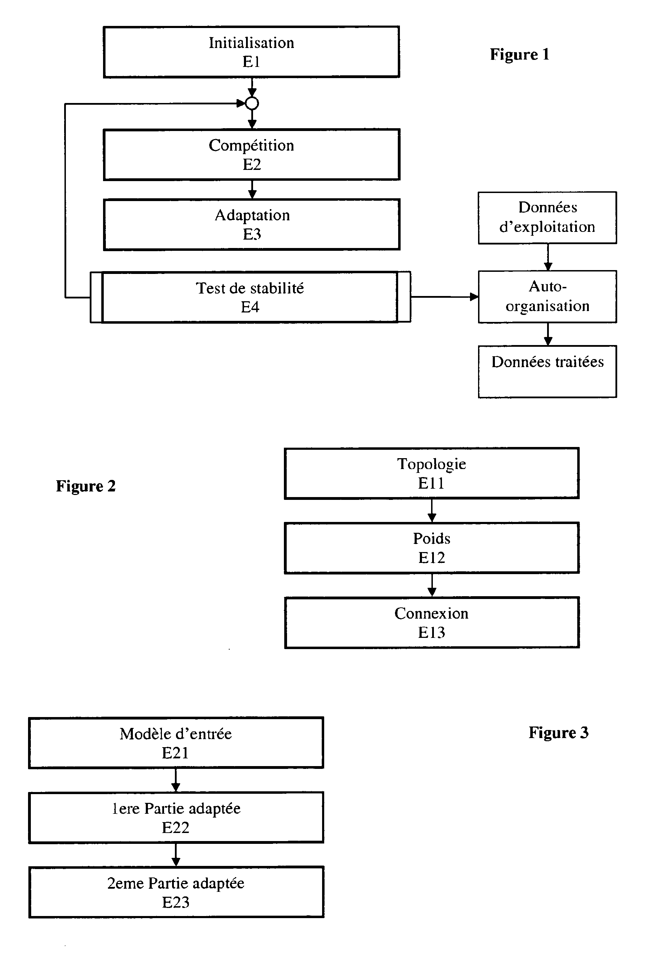

A la figure 1, on a représenté un organigramme de l'étape d'apprentissage du procédé de l'invention à la partie gauche de la figure et un schéma bloc d'un système mettant en oeuvre le procédé de l'invention après que la carte auto-organisatrice ait été adaptée au problème pour lequel le système est conçu. Après une étape E1 d'initialisation de la carte auto-organisatrice SOM, on entre dans une boucle composée sur une étape de compétition E2, puis une étape d'adaptation E3 et enfin un test E4 de stabilité. Quand le test E4 est positif, un signal d'activation de la carte auto-organisatrice SOM est généré de sorte qu'un ensemble de données d'exploitation peut être présenté à l'entrée de la carte auto-organisatrice et qu'un ensemble de données de sortie est disponible à l'issue de cette étape d'exploitation, qui suit l'étape d'adaptation décrite à l'aide de la figure 1.

Particulièrement, quand la sortie des neurones gagnants de la carte auto-organisatrice est activée, on dispose directement d'une représentation bi-dimensionnelle des catégories géographiques contenues dans les données de l'ensemble d'entrée. Plus loin, on montrera deux applications de ce genre.

On va maintenant détailler les étapes composantes de l'étape d'apprentissage du procédé de l'invention.

A la figure 2, on a représenté un organigramme des étapes composant l'étape E1 d'initialisation. Lors d'une étape E11, on réalise la définition de la topologie de la carte auto-organisatrice SOM. Cette étape permet d'adapter les voisinages des neurones de manière à adapter les connexions de voisinage au type de problème de classification visé.

Lors d'une étape E12, on initialise les M vecteurs de poids synaptique $w^{(i)}$ des M neurones i. Préférentiellement, les valeurs initiales des poids synaptiques sont aléatoires dans un intervalle déterminé.

Lors d'une étape E13, on initialise les connexions de voisinage en déterminant des valeurs v réelles de pertinence du couple constitué par le neurone premier gagnant et un neurone de voisinage à une valeur déterminée. Préférentiellement, une telle valeur initiale est nulle.

A la figure 3, on a représenté un organigramme des étapes composantes de l'étape E2 de compétition. Lors de l'étape 21, on prépare un ensemble de données $x^{(k)}$ (k=1 .. N) d'entrée ou modèle destiné à activer une zone particulière de la carte auto-organisatrice. Une telle zone particulière contient un nombre déterminé de neurones gagnants disposés selon un arrangement topologique déterminé.

Particulièrement, un tel arrangement topologique reproduit la répartition géographique des données d'apprentissage $x^{(k)}$. Dans un mode particulier de réalisation, la zone particulière activée contient un seul neurone. Dans le cas de données d'entrée répondant à un critère de classification géographique, un neurone unique correspond à la présence d'une entité géographique dans une position déterminée dans une carte géographique, cette position étant représentée dans les données d'apprentissage $x^{(k)}$.

Lors d'une étape E22, on choisit une première unité la meilleure gagnante u*, préférentiellement l'unité comportant un seul neurone. Dans un mode particulier de réalisation, le vecteur $w^{(i)}$ des poids synaptiques d'un neurone i est comparé aux données d'entrée $x^{(k)}$ en utilisant une distance déterminée, comme une distance euclidienne de sorte que le neurone gagnant pour l'entrée $x^{(k)}$ est déterminé par la relation :

$$u^*(x^{(k)}) = \underset{1 \le i \le M}{Arg \min} \left\| x^{(k)} - w^{(i)} \right\|^2$$

dans laquelle la fonction ArgMin() détermine le vecteur référence du neurone i pour lequel la distance du vecteur de ses poids synaptiques, ou prototype, $w^{(i)}$ est la plus faible avec l'entrée $x^{(k)}$.

Lors d'une étape E23, on choisit une seconde unité la meilleure gagnante u**, préférentiellement l'unité comportant un seul neurone. Dans un mode particulier de réalisation, le vecteur $w^{(i)}$ des poids synaptiques du neurone i est comparé aux données d'entrée $x^{(k)}$ en utilisant une distance déterminée, comme une distance euclidienne de sorte que le second neurone gagnant pour l'entrée $x^{(k)}$ est déterminé par la relation :

$$u^{**}(x^{(k)}) = \underset{1 \le i \le M, i \ne u^*}{Arg \min} \left\| x^{(k)} - w^{(i)} \right\|^2$$

dans laquelle la fonction ArgMin() détermine le vecteur de référence du neurone i pour lequel la distance du vecteur de ses poids synaptiques, ou prototype, $w^{(i)}$ est la plus faible avec l'entrée $x^{(k)}$.

D'autres distances que la distance euclidienne peuvent être choisies en fonction des caractéristiques particulières des données d'entrée.

A la figure 4, on a représenté un mode particulier de réalisation de l'étape d'adaptation de la carte auto-organisatrice. A l'étape E31, on sélectionne une fonction noyau $K_{ij}$ associée à un choix de voisinage d'un neurone gagnant, la fonction noyau $K_{ij}$ étant déterminée ainsi qu'il a été défini plus haut. On met alors à jour les vecteurs prototypes ou vecteurs des poids synaptiques des neurones de la carte auto-organisatrice sur la base d'une règle déterminée de la forme :

$$w^{(i)}(t) = w^{(i)}(t-1) - \varepsilon(t) \times K_{i,u^*(x^{(k)})} \times (w^{(i)}(t-1) - x^{(k)})$$

dans laquelle :

$w^{(i)}(t)$ et $w^{(i)}(t-1)$ sont les vecteurs prototypes de l'état antérieur t-1 de la carte auto organisatrice et de l'état de mise à jour t ;

$\varepsilon(t)$ est un paramètre pour contrôler la convergence de l'algorithme d'apprentissage à l'instant t.

A l'étape E32, on détermine le voisinage topologique $N(u^*)$ du neurone gagnant $u^*$ pour l'entrée $x^{(k)}$, c'est-à-dire le voisinage topologique $N(u^*)$ du neurone, premier meilleur gagnant déterminé lors de l'étape E22 décrite précédemment.

A l'étape E33, on détermine les valeurs v de valuation des connexions topologiques de chaque neurone, chaque valeur v étant associée à une liaison de voisinage v et représentée par une valeur réelle de pertinence du couple constitué par un neurone de voisinage connecté sur le neurone gagnant, ainsi qu'il a été défini plus haut. La détermination d'une valeur de pertinence de liaison d'un neurone au premier meilleur gagnant $u^*$ suit la règle suivante :

si la liaison est entre les neurones $u^*$ et $u^{**}$ :

$$v_{u^*,u^{**}}(t) = v_{u^*,u^{**}}(t-1) + r(t) \times \left| \aleph(u^*) \right|$$

si la liaison est entre le neurone $u^*$ et n'importe quel neurone du voisinage $N(u^*)$, le second meilleur gagnant $u^{**}$ étant exclu :

$$v_{u^*,i}(t) = v_{u^*,i}(t-1) - r(t) \times \left| \aleph(u^*) \right| \; : \; \forall i \in \aleph(u^*), i \neq u^{**}$$

Dans cette règle, la fonction r(t) est déterminée par une relation de la forme :

$$r(t) = \frac{1}{1 + e^{(-\frac{\alpha t}{t_{max}} + \beta)}}$$

les paramètres $\alpha$ (alpha) et $\beta$ (beta), étant déterminés de manière à effectuer une régularisation de l'adaptation des connexions topologiques.

Le test de bouclage du procédé de l'invention, ou test E4 représenté à la figure 1, est négatif tant que le nombre d'itération est inférieur à $t_{max}$.

Après la phase d'apprentissage décrite ci-dessus, les typologies, catégories ou classes correspondent aux sous-ensembles de neurones de la carte auto-organisatrice dont les connexions topologiques ou valeurs de pertinence, sont positives. La segmentation ou découpage de la carte topologique est par conséquent faite automatiquement durant l'apprentissage et sans supervision.

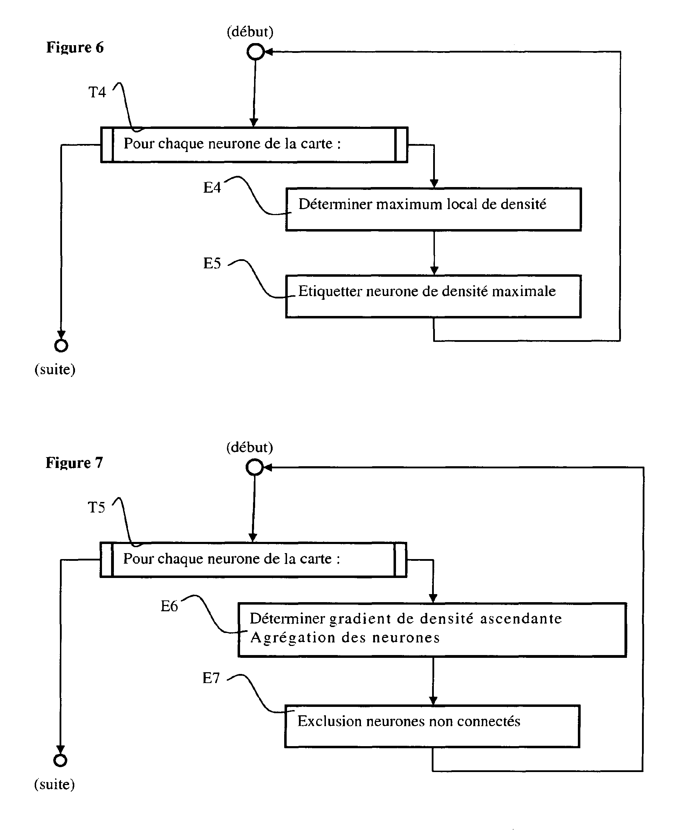

Dans un mode de réalisation de l'invention, il est prévu une étape supplémentaire de raffinement de la segmentation trouvée. A la figure 6, on a représenté un organigramme de cette étape supplémentaire de raffinement de la segmentation. Lors de cette étape supplémentaire de raffinement de segmentation, on exécute une boucle sur T4 sur l'ensemble des neurones de la carte auto-organisatrice déjà traitée par l'étape d'apprentissage décrite ci-dessus. On exécute en boucle les deux étapes suivantes :

-- on détermine (E4) les maxima locaux des densités locales, c'est-à-dire que l'on repère la référence des neurones associés à une densité plus élevée que celle de tous leurs voisins ;
-- on associe (E5) une étiquette ou numéro de classe ou segment ou catégorie à chaque neurone représentant un maximum local de densité.

Le contrôle passe alors à la suite du procédé de commande, notamment une étape d'exploitation de la carte auto-organisatrice dont les données de sortie sont organisées sur la base du raffinement de la segmentation trouvée. Particulièrement, cette étape de raffinement est avantageuse quand les maxima locaux de densités locales correspondent à des positions cartographiques déterminées des individus dont la position et/ou la trajectoire est suivie par l'exécution du procédé de commande de l'invention.

Dans un mode de réalisation de l'invention, il est prévu de réaliser la détermination d'une nouvelle segmentation sur la base de l'étape supplémentaire de raffinement de la segmentation initialement trouvée. À la figure 7, on a représenté un organigramme de cette étape de détermination d'une segmentation supplémentaire. Lors de cette étape de détermination d'une segmentation supplémentaire, on exécute une boucle (T5) sur tous les neurones de la carte auto-organisatrice, après l'étape précédente de raffinement de la segmentation trouvée au cours de laquelle on exécute les opérations suivantes :

-- on réalise (E6) l'agrégation des autres neurones de la carte autour des pics de densité en suivant un gradient de densité ascendante le long des connexions topologiques reliant deux neurones d'une même classe ou segment ou catégorie ; et
-- on n'attribue pas (E7) d'étiquette ou numéro de classe, ou segment, ou catégorie, aux neurones non connectés.

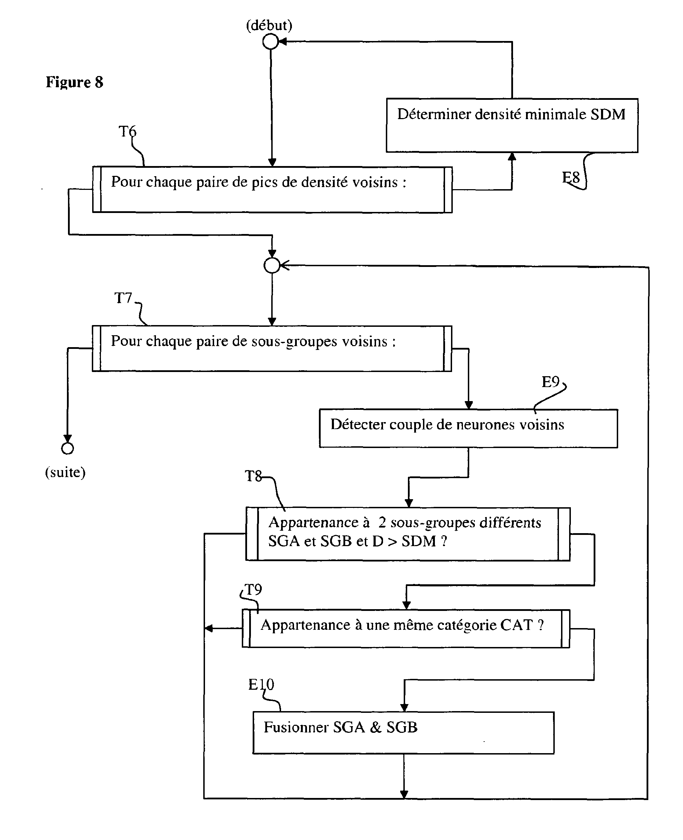

Dans un mode de réalisation de l'invention, il est prévu de réaliser une étape supplémentaire de correction du bruit par regroupement de sous-groupes, comme des classes, segments ou catégories, représentée à la figure 8. En effet, dans certains groupes, classes, segments ou catégories, il existe un certain nombre de neurones ou cellules de la carte auto-organisatrice qui ne présentent pas une distance suffisante exprimée en termes de densité entre deux catégories initialement différentes et qu'il est donc préférable de procéder à une fusion. Dans ce but, lors d'une boucle T6, pour chaque paire de maxima local (pic) de densité qui corresponde à deux neurones voisins dans la carte auto-organisatrice, on examine entre ces pics de densité s'il existe des neurones de densité minimale. Lors d'une étape E8, on teste la valeur de densité de chaque neurone disposé géographiquement dans la carte auto-organisatrice entre deux maxima de densité ou pics, de façon à déterminer la valeur minimale de densité SDM. À la fin de la boucle T6, le contrôle passe à une nouvelle boucle T7 au cours de laquelle on exécute la fusion de deux sous-groupes dont les densités pour deux neurones voisins sont trop peu différentes. À cette fin, pour chaque paire de sous-groupe voisins, sélectionnée lors du test T7, on exécute lors d'une étape E9 la détection d'un couple de neurones voisins. Puis on exécute le test T8 pour savoir si les deux neurones appartiennent à deux sous-groupes différents, soient les sous-groupe SGA et SGB. Si les deux neurones voisins appartiennent à des sous-groupes SGA et SGB différents, on exécute alors le test pour savoir si les deux sous-groupe appartiennent à une même catégorie CAT lors d'un test T9. Si le test T9 est positif, on exécute la fusion des deux sous groupes SGA et SGB. Si l'un ou l'autre des tests T8 et/ou T9 et après l'exécution de l'étape E10, le contrôle repasse au test de fin de boucle T7. Quand le test de fin de boucle T7 est positif, le contrôle passe à l'étape d'exploitation, l'organisation de la carte auto organisatrice étant dégagée du bruit constitué par les sous-groupes trop peu distincts dans une même catégorie.

D'une manière générale, l'étape de raffinement de la classification se base sur les densités locales. Elle consiste, à l'aide de moyens pour déterminer et maintenir ce paramètre $D^{(i)}$, en la mise à jour de la densité locale $D^{(i)}$ associée à chaque neurone i de la carte selon une règle d'adaptation comme la règle d'adaptation suivante :

$$D^{(i)}(t) = D^{(i)}(t-1) + r(t) \times e^{-\frac{\left\| x^{(k)} - w^{(i)}(t) \right\|^2}{2\lambda^2(t)}}$$

le paramètre $\square$ (lambda) étant déterminé de manière à effectuer une régularisation des densités, les autres paramètres ayant déjà été définis plus haut.

A la figure 12, on a représenté la comparaison d'une classification opérée à l'aide d'une carte auto-organisatrice et d'un procédé de commande selon l'invention, avec une classification opérée à l'aide d'une carte SOM de l'état de la technique sur un même jeu de données d'entrée.

La carte auto-organisatrice 101 montre sur une section de visualisation deux zones de neurones actifs : à savoir une première zone de neurones contiguës 102 correspondant à une première classe de données dans le jeu de données d'entrée et une seconde zone de neurones contiguës 102 correspondant à une seconde classe de données.

A la différence, la visualisation des neurones actifs sur une carte SOM 104 de l'état de la technique révèle un plus grand nombre de zones homogènes, ici 6 zones à comparer aux deux zones détectées dans l'invention. De plus certaines données sont attribuées à des classes qui sont rejetées par la classification de la carte de l'invention 101.

Ainsi, l'invention permet d'utiliser une carte SOM ou auto-organisatrice comme un outil de réduction de dimensions des données d'entrée et de terminer par une classification dans le second niveau de travail qui a été décrit plus haut. La classification apportée par l'invention n'est pas limitée à des groupes convexes, mais au contraire à la reconnaissance de groupes de formes arbitraires. Enfin, l'invention présente l'avantage de déterminer automatiquement pendant l'étape d'apprentissage le nombre de groupes homogènes, ou classes, sans obliger à former d'hypothèses a priori sur les critères de classification.

Dans un autre mode de réalisation de l'invention, la classification est automatiquement adaptée en fonction des diverses exécutions précédentes. A cette fin, la carte auto-organisatrice de l'invention coopère de plus avec une ressource d'apprentissage incrémentale et évolutive ainsi qu'il est décrit ci-dessous

Le procédé de commande de l'invention comporte une étape d'apprentissage qui est incrémentale et évolutive. A cette fin, on exécute une classification non supervisée incrémentale qui consiste à chercher un modèle évolutif de représentation qui résume d'une manière globale l'ensemble des données et leur évolution. Cette classification comporte une étape pour incorporer l'évolution durant le processus de la modélisation et de la doter ainsi des propriétés de plasticité et stabilité. En effet, dans le cas où les exemples d'apprentissage (jeux de données d'apprentissage) sont fournis en ligne, c'est-à-dire lors de l'exploitation, et les concepts de classes, c'est-à-dire le résultat de la classification automatique, varient dans le temps, le formalisme statistique développé pour l'apprentissage dans le procédé de commande décrit plus haut n'est plus valide. La présente invention concerne aussi un procédé de commande comportant aussi une étape d'apprentissage non-supervisé évolutif. Une telle étape d'apprentissage non-supervisé évolutif permet d'incorporer toute évolution des connaissances dans le modèle sans oublier les connaissances déjà acquises.

Les données collectées ou données d'entrée, sont organisées de manière connue en soi en une séquence temporelle de bases de données notée : $\{BD_0, BD_1, BD_2, ..., BD_{t-1}, BD_t, ....\}$.

Une modélisation initiale de la base de données $BD_0$ est faite par un système d'apprentissage $SOM_0$ avec les paramètres $(W_0, V_0, D_0)$, regroupant les prototypes $W_0$, les valuations des liens topologiques $V_0$ et les densités de données $D_0$, chaque triplet () étant associé à une carte auto-organisatrice de l'invention.

Quand la base $BD_1$ arrive, il est effectué un apprentissage d'un autre modèle SOM1 en initialisant ses paramètres par $(W_0, Vo, D_0)$ et une base de données d'apprentissage $BD_1+W_0$ composée de la réunion des nouveaux exemples et des prototypes $W_0$ de la carte $SOM_0$.

A l'arrivée de la base $BD_2$, nous procédons de manière équivalente que précédemment : initialisation par $(W_1, V_1, D_1)$ et apprentissage sur $BD_2+W_0+W_1$.

A l'instant t avec la base $BD_t$, nous apprenons une autre carte $SOM_t$ avec une initialisation $(W_{t-1}, V_{t-1}, D_{t-1})$ et une base d'apprentissage $BD_t+W_0+W_1+...+W_{t-1}$.

Ainsi d'une manière générale, le procédé de commande de l'invention comporte une étape d'apprentissage évolutif et incrémental qui est répété à des instants prédéterminés, et qui comporte les étapes suivantes :

- réception d'une nouvelle base de données $BD_t$,
- apprentissage d'une nouvelle carte auto-organisatrice $SOM_t$ avec une initialisation effectuée par la réunion du triplet de définition de la carte précédente $SOM_{t-1}$, soit $(W_{t-1}, V_{t-1}, D_{t-1})$ et d'une base d'apprentissage composée de la réunion de la base de données d'apprentissage et des t ensembles de vecteurs prototypes acquis précédemment depuis la première mise en service de la carte auto-organisatrice de l'invention, soit $\{BD_t+W_0+W_1+...+W_{t-1}\}$.

A la figure 11, on a décrit une application de la carte auto-organisatrice et du procédé de commande décrits ci-dessus. Une pluralité d'individus mobiles dans un espace réel géographique sont porteurs chacun de marqueurs individuels ID-ét 122 et ID-ét 124. Leur nombre peut être très élevé, par exemple plusieurs dizaines de milliers de marqueurs. Dans un mode de réalisation de l'invention, chaque marqueur est constitué par une étiquette radio-fréquence RF-ID, qui contient au moins une donnée d'identification personnelle associée au porteur mobile de l'étiquette. Un tel porteur mobile peut être un chariot d'achat de marchandises dans un supermarché ou une galerie marchande, ou une étiquette radio-fréquence associée à une personne. L'espace réel 126 peut être constitué par n'importe quel zone géographique ou tout autre lieu organisé selon au moins une dimension géométrique, préférentiellement de deux ou trois dimensions géométriques. Un tel espace réel peut être constitué par l'espace intérieur d'un magasin, d'une galerie marchande, ou d'un domaine quelconque.

Dans l'espace réel 126 sont disposés à des localisations géographiques déterminées au moins un détecteur de tels marqueurs, comme un lecteur d'étiquettes radio-fréquence RF-ID 120 dont la mémoire de détection est capable de contenir des données de localisation et d'horodatage des marqueurs comme les marqueurs 122, 124 qui entrent dans son champ de détection. Au moins à des dates prédéterminées, les données de détection inscrites au fur et à mesure des détections sont déchargées vers la section de stockage d'un serveur de suivi et d'analyse des positions et des déplacements des mobiles 122, 124 dans l'espace réel. Le serveur de suivi et d'analyse 130 -140 comporte :

- une section de stockage qui maintient les données de détection des divers détecteurs des marqueurs comme le détecteur 120 ;
- une section de pré-traitement 132 qui permet d'agglomérer les données des divers lecteurs mémorisées dans la section de stockage 130 ;
- une section d'intégration des données 134 qui permet notamment de régulariser les dates des téléchargements des divers lecteurs de sorte que l'ensemble des données déchargées vers le serveur de suivi et d'analyse puissent être comparées et classifiées selon des critères de classification déterminées ;
- une section de prétraitement 136 qui permet de rejeter les données erronées encore contenues dans les données issues de la section d'intégration 134 ;
- une section de classification 138 qui comporte au moins une carte auto-organisatrice selon ce qui a été décrit plus haut et qui fonctionne selon un procédé de commande selon ce qui a été décrit plus haut, la section de classification comportant aussi une ressource de détermination de critères de classification, une section d'apprentissage pour appliquer des données d'entrée d'apprentissage pour la carte auto-organisatrice ; et
- une section de visualisation 140 de la classification des données opérées par la carte auto-organisatrice de la section de classification 138.

La section de classification 138 et la section de visualisation 140 sont prévues de manière que l'utilisateur du serveur de suivi et d'analyse 130-140 peut réaliser :

- la visualisation des données de position instantanée ou à des époques déterminées de la position d'au moins un mobile 122, 124, ou d'un groupe de tels porteurs, et/ou
- la visualisation des données de trajectoires sur au moins une période déterminée d'au moins un mobile 122, 124 ou d'un groupe de tels porteurs.

A la Figure 12, on a représenté une autre application de la carte auto-organisatrice et du procédé de commande décrits ci-dessus. Dans une telle application, une pluralité de clients WEB ou de tout réseau téléinformatique convenable, peut consulter par présentation d'une requête au moins une ressource localisée sur le réseau par une adresse url selon une arborescence décrivant la géographie des accès possibles de tous les clients à tous les serveurs WEB. L'application de l'invention permet de réaliser un suivi et une analyse des comportements des utilisateurs ou clients des serveurs du réseau WEB qui constitue un espace réel comparable à celui décrit en relation avec la figure 11.

A cette fin, au moins les sites WEB en relation avec le serveur de suivi et d'analyse des données de navigation 148 - 156, comme le site WEB 144, comportent une ressource permettant de déposer un marqueur ou traceur 147, par exemple sous forme d'un script Javascript (TM) sur la machine d'un client 142 dont le navigateur a produit une requête 145 comme une requête http pour accéder à une ressource pointé par un localisateur url 146. Le traceur ou marqueur 146 peut être initialement chargé sur le site Web 144 lors d'une procédure d'initialisation qui n'est pas directement concernée par la présente invention et qui est bien connue de l'homme de métier. Cette opération est représentée par la flèche reliant le serveur de marqueurs 148 et l'url 146 puis par la flèche reliant l'url 146 à la zone d'exécution du marqueur 147 sur la machine du client lorsque ce dernier a exécuté la requête 145, comme une requête http d'accès à la ressource url 146.

Le serveur de marqueurs 148 reçoit alors des données de traçage comportant des données d'identification du client 142 et de l'url 146 ainsi que des données d'horodatage. En réponse, au moins à des dates prédéterminées, les données de traçage maintenues par le serveur de marqueurs 148 sont transmises à une section d'intégration 150, analogue à la section d'intégration 134, décrite ci-dessus.

Les données de traçage après intégration sont ensuite transmises à une section de prétraitement 152 analogue à la section de prétraitement 136 décrite plus haut en relation avec l'application de la figure 11.

Les données de traçage après prétraitement sont ensuite fournies à une section de classification 154, analogue à la section de classification 138 décrite plus haut en relation avec l'application de la figure 11.

Les données issues de la classification par la section 154 sont ensuite passées à une section de représentation 156 analogue à la section de visualisation 156 136 décrite plus haut en relation avec l'application de la figure 11.

La section de classification 154 et la section de représentation 156 sont prévues de manière que l'utilisateur du serveur de suivi et d'analyse 148 - 156 peut réaliser :

- la visualisation des données de consultations instantanée ou à des époques déterminées de la navigation d'au moins un client WEB 142, ou d'un groupe de tels clients WEB, et/ou
- la visualisation des données de trajectoires sur au moins une période déterminée d'au moins un client WEB 142 ou d'un groupe de tels clients dans au moins une section de l'arborescence des serveurs WEB constituant l'espace réel classifié selon l'invention.

Comme cela a été décrit dans l'introduction de la présente demande et aux étapes E2 et E3, un objet de l'invention est un procédé de mise à jour d'une carte auto-organisatrice comprenant des neurones et des connexions valuées entre les neurones, chacun des neurones étant associé à un vecteur respectif, dit vecteur prototype.

Comme cela a été décrit aux étapes E22 et E23, il est prévu, au cours de ce procédé de mise à jour, de sélectionner les deux neurones u*, u**, respectivement appelés meilleur neurone gagnant et second meilleur neurone gagnant, ayant chacun le vecteur prototype respectivement le premier et le second plus proche d'un vecteur d'un point d'apprentissage x(k), selon une règle de distance déterminée.

Comme cela a été décrit à l'étape E31, il est en outre prévu, au cours de ce procédé de mise à jour, de modifier les vecteurs prototypes du meilleur neurone gagnant u* et des neurones situés autour du meilleur neurone gagnant u* dans la carte auto-organisatrice, en direction du vecteur du point d'apprentissage x(k).

Comme cela a été décrit à l'étape E32, il est en outre prévu, au cours de ce procédé de mise à jour, de déterminer les neurones voisins N(u*) du meilleur neurone gagnant u* dans la carte auto-organisatrice.

Comme cela a été décrit à l'étape E33, il est en outre prévu, dans ce procédé de mise à jour, que, si le second meilleur neurone gagnant u** fait partie des neurones voisins N(u*), augmenter la valuation de la connexion entre les premier et second meilleurs neurones gagnants, et de diminuer la valuation de chaque connexion entre le premier meilleur neurone gagnant et les neurones voisins directs N(u*) autres que le second meilleur neurone gagnant u**.

En outre, on peut remarquer que le procédé de mise à jour selon l'invention laisse inchangé le nombre de neurones de la carte auto-organisatrice, et le nombre de connexions entre les neurones de la carte auto-organisatrice.

Comme cela a été décrit à l'étape E33, l'augmentation de la valuation de la connexion entre les premier et second meilleurs neurones gagnants est réalisée par la formule :

$$v_{u*,u**}(t) = v_{u*,u**}(t-1) + r(t) \times |\aleph(u*)|$$

dans laquelle : $v_{u*,u**}(t)$ et $v_{u*,u**}(t-1)$ sont la valuation de la connexion entre les premier et second meilleurs neurones gagnants, respectivement, après et avant mise à jour ;

$r(t)$ est une fonction de régularisation de l'adaptation des connexions ; et

$|\aleph(u*)|$ est le nombre de neurones voisins du premier meilleur neurone gagnant.

Comme cela a été décrit sur la figure 1 et dans la description correspondante, un autre objet de l'invention est un procédé d'apprentissage d'une carte auto-organisatrice comprenant des neurones et des connexions valuées entre les neurones, chacun des neurones étant associé à un vecteur prototype respectif.

Comme cela a été décrit à l'étape E13, il est prévu, dans ce procédé d'apprentissage, d'initialiser la carte auto-organisatrice, en initialisant la valuation de chaque connexion à une valeur prédéterminée.

Comme cela a été décrit dans les étapes E2 et E3, il est en outre prévu, dans ce procédé d'apprentissage, pour chacun d'une pluralité de points d'apprentissage x(k), de mettre à jour la carte auto-organisatrice selon le procédé de mise à jour selon l'invention.

Comme cela a été décrit à l'étape E12, il est en outre prévu, dans ce procédé d'aprrentissage, que l'initialisation du réseau de neurones comprend en outre l'initialisation du vecteur prototype de chaque neurone à un vecteur aléatoire compris dans un intervalle prédéterminé.

Comme cela a été décrit dans l'introduction de la présente demande, il est en outre prévu, dans ce procédé d'apprentissage, la découverte de groupes, typologies, catégories ou classes, automatiquement en même temps que l'estimation des prototypes.

Comme cela a été décrit dans l'introduction de la présente demande, il est en outre prévu, dans ce procédé d'apprentissage, d'associer, à chaque neurone de la carte auto-organisatrice, une densité dans laquelle est enregistré le nombre de points d'apprentissage qui sont associés au neurone.

Comme cela a été décrit aux étapes E4 et E5, il est en outre prévu, dans ce procédé d'apprentissage, de déterminer les maxima locaux de densités, et d'associer une étiquette ou numéro de classe ou segment ou catégorie à chaque neurone représentant un maximum local de densité.

Comme cela a été décrit dans l'introduction de la demande, il est en outre prévu, dans ce procédé d'apprentissage, d'obtenir les vecteurs d'apprentissage à partir d'un capteur, tel qu'une étiquette RFID ou des marqueurs de navigation sur un réseau téléinformatique.

Comme cela a été décrit dans l'introduction de la demande, il est en outre prévu que ce procédé d'apprentissage soit non supervisé.

Comme cela a été décrit avec la description de l'autre mode de réalisation de l'invention, à la fin de la présente demande, il est prévu dans l'invention de réaliser l'apprentissage de la carte auto-organisatrice à partir d'un premier ensemble de points d'apprentissage, en particulier par un procédé d'apprentissage selon l'invetion, puis l'ajout, dans un second ensemble de points d'apprentissage, des vecteurs prototypes obtenus suite à l'apprentissage précédent, afin d'obtenir un nouvel ensemble augmenté, puis le ré-apprentissage de la carte auto-organisatrice à partir du nouvel ensemble augmenté, en particulier par un procédé d'apprentissage selon l'invention.

Comme cela a été prévu dans la description en référence à la figure 11, il est prévu dans l'invention de réaliser l'apprentissage de la carte par un procédé d'apprentissage selon l'invention, puis la visualisation de la classification des données opérées par la carte auto-organisatrice.

## Revendications

1. Procédé d'apprentissage d'une carte auto-organisatrice comprenant des neurones et des connexions valuées entre les neurones, chacun des neurones étant associé à un vecteur respectif, dit vecteur prototype, le procédé comprenant :

   + initialiser le réseau de neurones, en initialisant la valuation de chaque connexion à une valeur prédéterminée,
   + pour chacun d'une pluralité de points d'apprentissage (x(k)) :

      - sélectionner les deux neurones (u*, u**), respectivement appelés meilleur neurone gagnant et second meilleur neurone gagnant, ayant chacun le vecteur prototype respectivement le premier et le second plus proche d'un vecteur d'un point d'apprentissage (x(k)), selon une règle de distance déterminée, le vecteur du point d'apprentissage étant obtenu à partir d'un capteur, tel qu'une étiquette RFID ou des marqueurs de navigation sur un réseau téléinformatique,
      - modifier les vecteurs prototypes des neurones de la carte auto-organisatrice, en direction du vecteur du point d'apprentissage (x(k)),
      - déterminer des neurones voisins (N(u*)) du meilleur neurone gagnant (u*) dans la carte auto-organisatrice, lesdits neurones voisins (N(u*)) étant les neurones se trouvant à une distance du meilleur neurone gagnant (u*) inférieure à un seuil de voisinage déterminé,
      - si le second meilleur neurone gagnant (u**) fait partie des neurones voisins (N(u*)), augmenter la valuation de la connexion entre les premier et second meilleurs neurones gagnants,
      le procédé étant **caractérisé en ce qu'**il comprend :
      - diminuer la valuation de chaque connexion entre le premier meilleur neurone gagnant et les neurones voisins (N(u*)) autres que le second meilleur neurone gagnant (u**),
      les neurones connectés via des connexions topologiques positives à la fin de l'apprentissage définissant des groupes, des typologies ou des classes.

2. Procédé selon la revendication 1, **caractérisé en outre en ce qu'**il laisse inchangé le nombre de neurones de la carte auto-organisatrice.

3. Procédé selon la revendication 1 ou 2, **caractérisé en outre en ce qu'**il laisse inchangé le nombre de connexions entre les neurones de la carte auto-organisatrice.

4. Procédé selon l'une quelconque des revendications 1 à 3. **caractérisé en outre en ce que** l'augmentation de la valuation de la connexion entre les premier et second meilleurs neurones gagnants est réalisée par la formule :

$$v_{u^*,u^{**}}(t) = v_{u^*,u^{**}}(t-1) + r(t) \times |\aleph(u^*)|$$

dans laquelle :

$v_{u^*,u^{**}}(t)$ et $v_{u^*,u^{**}}(t-1)$ sont la valuation de la connexion entre les premier et second meilleurs neurones gagnants, respectivement, après et avant mise à jour ;

$r(t)$ est une fonction de régularisation de l'adaptation des connexions ; et

$|\aleph(u^*)|$ est le nombre de neurones voisins du premier meilleur neurone gagnant.

5. Procédé selon l'une quelconque des revendications précédentes, **caractérisé en outre en ce que** l'initialisation du réseau de neurones comprend en outre l'initialisation du vecteur prototype de chaque neurone à un vecteur aléatoire compris dans un intervalle prédéterminé.

6. Procédé selon l'une quelconque des revendications précédentes, **caractérisé en outre en ce qu'**il comprend la découverte de groupes, typologies, catégories ou classes, automatiquement en même temps que l'estimation des prototypes.

7. Procédé selon l'une quelconque des revendications précédentes, **caractérisé en outre en ce qu'**il comprend :

- associer, à chaque neurone de la carte auto-organisatrice, une densité dans laquelle est enregistré le nombre de points d'apprentissage qui sont associés au neurone.

8. Procédé selon la revendication 7, **caractérisé en outre en ce qu'**il comprend :

- déterminer les maxima locaux de densités,
- associer une étiquette ou numéro de classe ou segment ou catégorie à chaque neurone représentant un maximum local de densité.

9. Procédé selon l'une quelconque des revendications précédentes, **caractérisé en outre en ce qu'**il est non supervisé.

10. Procédé d'apprentissage d'une carte auto-organisatrice, **caractérisé en ce qu'**il comprend :

- l'apprentissage de la carte auto-organisatrice à partir d'un premier ensemble de points d'apprentissage, par un procédé selon l'une quelconque des revendications précédentes,
- l'ajout, dans un second ensemble de points d'apprentissage, des vecteurs prototypes obtenus suite à l'apprentissage précédent, afin d'obtenir un nouvel ensemble augmenté, et
- le ré-apprentissage de la carte auto-organisatrice à partir du nouvel ensemble augmenté, par un procédé selon l'une quelconque des revendications précédentes.

11. Procédé d'apprentissage d'une carte auto-organisatrice, **caractérisé en ce qu'**il comprend :

- l'apprentissage de la carte par un procédé selon l'une quelconque des revendications 1 à 10, et
- la visualisation de la classification des données opérées par la carte auto-organisatrice.

**Claims**

1. Method for learning a self-organising map comprising neurons and valued connections between the neurons, each of the neurons being associated with a respective vector, the so-called prototype vector, the method including:

+ initialising the neural network by initialising the valuation of each connection to a predetermined value,
+ for each of a plurality of learning points (x(k)):

- selecting the two neurons (u*, u**), respectively called best winning neuron and second best winning neuron, each having the prototype vector respectively the first and the second closest to a vector of a learning point (x(k)) in accordance with a determined distance rule, the vector of the learning point being obtained from a sensor such as an RFID tag or navigation markers in a data communication network,
- modifying the prototype vectors of the neurons of the self-organising map in the direction of the vector of the learning point (x(k)),
- determining the neighbouring neurons (N(u*)) of the best winning neuron (u*) in the self-organising map, said neighbouring neurons (N(u*)) being the neurons located at a distance from the best winning neuron (u*) of less than a determined neighbourhood threshold,
- if the second best winning neuron (u**) is part of the neighbouring neurons (N(u*)), increasing the valuation of the connection between the first and second best winning neurons,
the process being **characterised in that** it includes:
- reducing the valuation of each connection between the first best winning neuron and the neighbouring neurons (N(u*)) other than the second best winning neuron (u**),
the neurons connected via positive topological connections at the conclusion of the learning defining groups, typologies or classes.

2.  Method according to claim 1, further **characterised in that** it leaves unchanged the number of neurons of the self-organising map.

3.  Method according to claim 1 or 2, further **characterised in that** it leaves unchanged the number of connections between the neurons of the self-organising map.

4.  Method according to any one of claims 1 to 3, further **characterised in that** the increase of the valuation of the connection between the first and second best winning neurons is carried out by the formula:

$$v_{u^*,u^{**}}(t) = v_{u^*,u^{**}}(t-1) + r(t) \times \left| \aleph(u^*) \right|$$

in which:

$v_{u^*,u^{**}}(t)$ and $v_{u^*,u^{**}}(t-1)$ are the valuation of the connection between the first and second best winning neurons, respectively after and before updating;
$r(t)$ is a function for regularising the adaptation of the connections; and
$\left| \aleph(u^*) \right|$ is the number of neighbouring neurons of the first best winning neuron.

5.  Method according to any one of the preceding claims, further **characterised in that** the initialisation of the neural network further includes the initialisation of the prototype vector of each neuron to a random vector included within a predetermined range.

6.  Method according to any one of the preceding claims, further **characterised in that** it includes the discovery of groups, typologies, categories or classes automatically at the same time as the estimation of the prototypes.

7.  Method according to any one of the preceding claims, further **characterised in that** it includes:

- associating, with each neuron of the self-organising map, a density in which there is recorded the number of learning points that are associated with the neuron.

8.  Method according to claim 7, further **characterised in that** it includes:

- determining the local maxima of densities,
- associating a tag or class-number or segment or category with each neuron representing a local density maximum.

9.  Method according to any one of the preceding claims, further **characterised in that** it is not supervised.

10. Method for learning a self-organising map, **characterised in that** it comprises:

- learning the self-organising map from a first set of learning points by a method according to any one of the preceding claims,
- adding, in a second set of learning points, the prototype vectors obtained following the previous learning, in order to obtain a new increased set, and
- re-learning the self-organising map from the new increased set by a method according to any one of the preceding claims.

11. Method for learning a self-organising map, **characterised in that** it comprises:

- learning the map by a method according to any one of claims 1 to 10, and
- displaying the classification of the data that have been operated by the self-organising map.

**Patentansprüche**

1. Lernverfahren einer selbstorganisierenden Karte, die Neuronen und gewichtete Verbindungen zwischen den Neuronen umfasst, wobei jedes der Neuronen einem jeweiligen Vektor zugeordnet ist, genannt Prototypvektor, wobei das Verfahren umfasst:

   + Initialisieren des Neuronengitters, indem die Gewichtung jeder Verbindung auf einen vorbestimmten Wert initialisiert wird,
   + für jeden Punkt einer Mehrzahl von Lernpunkten (x(k)):

      - Auswählen der zwei Neuronen (u*, u**), jeweils bestes Gewinnerneuron und zweitbestes Gewinnerneuron bezeichnet, die jedes den Prototypvektor aufweisen, der jeweils am nächsten und zweitnächsten zu einem Vektor eines Lernpunktes (x(k)) gemäß einer bestimmten Entfernungsregel ist, wobei der Vektor des Lernpunktes von einem Wandler erhalten wird, wie einem RFID-Chip oder Navigationsmarkern auf einem Teleinformatik-Netz,
      - Modifizieren der Prototypvektoren der Neuronen der selbstorganisierenden Karte in Richtung des Vektors des Lernpunktes (x(k)),
      - Bestimmen von Neuronen (N(u*)) benachbart zum besten Gewinnerneuron (u*) in der selbstorganisierenden Karte, wobei die benachbarten Neuronen (N(u*)) Neuronen sind, die sich in einer Entfernung zum besten Gewinnerneuron (u*) kleiner als eine bestimmte Nachbarschaftsschwelle befinden,
      - Erhöhen der Gewichtung der Verbindung zwischen dem erstbesten und dem zweitbesten Gewinnerneuron, wenn das zweitbeste Gewinnerneuron (u**) Teil der benachbarten Neuronen (N(u*)) ist,
      wobei das Verfahren **dadurch gekennzeichnet ist, dass** es umfasst:
      - Verringern der Gewichtung jeder Verbindung zwischen dem erstbesten Gewinnerneuron und den benachbarten Neuronen (N(u*)), die nicht das zweitbeste Gewinnerneuron (u**) sind, wobei die Neuronen, die am Ende des Lernens über positive topologische Verbindungen verbunden sind, Gruppen, Topologien oder Klassen definieren.

2. Verfahren nach Anspruch 1, außerdem **dadurch gekennzeichnet, dass** es die Anzahl der Neuronen der selbstorganisierenden Karte unverändert lässt.

3. Verfahren nach Anspruch 1 oder Anspruch 2, außerdem **dadurch gekennzeichnet, dass** es die Anzahl der Verbindungen zwischen den Neuronen der selbstorganisierenden Karte unverändert lässt.

4. Verfahren nach einem beliebigen der Ansprüche 1 bis 3, außerdem **dadurch gekennzeichnet, dass** die Erhöhung der Gewichtung der Verbindung zwischen dem erstbesten und dem zweitbesten Gewinnerneuron durch die Formel realisiert ist:

$$v_{u^*,u^{**}}(t) = v_{u^*,u^{**}}(t-1) + r(t) \times |N(u^*)|$$

in der:

$v_{u^*,u^{**}}(t)$ und $v_{u^*,u^{**}}(t-1)$ die Gewichtung der Verbindung zwischen dem erstbesten und dem zweitbesten Gewinnerneuron jeweils nach und vor der Aktualisierung sind;
r(t) eine Regulierungsfunktion der Adaption der Verbindungen ist; und
|N(u*)| die Anzahl von Neuronen benachbart zu dem erstbesten Gewinnerneuron ist.

5. Verfahren nach einem beliebigen der vorhergehenden Ansprüche, außerdem **dadurch gekennzeichnet, dass** die Initialisierung des Neuronengitters außerdem die Initialisierung des Prototypvektors jedes Neurons zu einem Zufallsvektor umfasst, der in einem vorbestimmten Intervall umfasst ist.

**6.** Verfahren nach einem beliebigen der vorhergehenden Ansprüche, außerdem **dadurch gekennzeichnet, dass** es außerdem das Auffinden von Gruppen, Topologien, Kategorien oder Klassen in automatischer Weise gleichzeitig zur Schätzung der Prototypen umfasst.

**7.** Verfahren nach einem beliebigen der vorhergehenden Ansprüche, außerdem **dadurch gekennzeichnet, dass** es außerdem umfasst:

- Zuordnen einer Dichte zu jedem Neuron der selbstorganisierenden Karte, in der die Anzahl der Lernpunkte, die dem Neuron zugeordnet sind, aufgezeichnet ist.

**8.** Verfahren nach Anspruch 7, außerdem **dadurch gekennzeichnet, dass** es umfasst:

- Bestimmen der lokalen Dichtemaxima,
- Zuordnen eines Etiketts oder einer Nummer einer Klasse oder eines Segments oder einer Kategorie zu jedem Neuron, das ein lokales Dichtemaximum darstellt.

**9.** Verfahren nach einem beliebigen der vorhergehenden Ansprüche, außerdem **dadurch gekennzeichnet, dass** es nicht überwacht ist.

**10.** Lernverfahren einer selbstorganisierenden Karte, **dadurch gekennzeichnet, dass** es umfasst:

- das Lernen der selbstorganisierenden Karte aus einer ersten Anordnung von Lernpunkten durch ein Verfahren nach einem beliebigen der vorhergehenden Ansprüche,
- in einer zweiten Anordnung von Lernpunkten das Zusetzen von Prototypvektoren, die als Folge des vorhergehenden Lernens erhalten werden, um eine neue erhöhte Anordnung zu erhalten, und
- das nochmalige Lernen der selbstorganisierenden Karte ausgehend von der neuen erhöhten Anordnung durch ein Verfahren nach einem beliebigen der vorhergehenden Ansprüche.

**11.** Lernverfahren einer selbstorganisierenden Karte, **dadurch gekennzeichnet, dass** es umfasst:

- das Lernen der Karte durch ein Verfahren nach einem beliebigen der Ansprüche 1 bis 10 und
- die Visualisierung der Klassifikation der durch die selbstorganisierende Karte behandelten Daten.

**Figure 1**

Initialisation
E1

Compétition
E2

Adaptation
E3

Test de stabilité
E4

Données d'exploitation

Auto-organisation

Données traitées

**Figure 2**

Topologie
E11

Poids
E12

Connexion
E13

**Figure 3**

Modèle d'entrée
E21

1ere Partie adaptée
E22

2eme Partie adaptée
E23

Mise à jour des prototypes — E31

Déterminer le voisinage de l'unité la meilleure — E32

Déterminer valeurs de pertinence — E33

**Figure 4**

**Figure 5**

Générateur de poids synaptiques $w^{(i)}$ du neurone $N_i$

12

19

15

16

Données d'entrée 10

14

18

17

**Figure 6**

(début)

T4

Pour chaque neurone de la carte :

E4

Déterminer maximum local de densité

E5

Etiquetter neurone de densité maximale

(suite)

**Figure 7**

(début)

T5

Pour chaque neurone de la carte :

E6

Déterminer gradient de densité ascendante
Agrégation des neurones

E7

Exclusion neurones non connectés

(suite)

**Figure 8**

(début)

Déterminer densité minimale SDM

E8

T6

Pour chaque paire de pics de densité voisins :

T7

Pour chaque paire de sous-groupes voisins :

(suite)

E9

Détecter couple de neurones voisins

T8

Appartenance à 2 sous-groupes différents SGA et SGB et D > SDM ?

T9

Appartenance à une même catégorie CAT ?

E10

Fusionner SGA & SGB

**Figure 9**

Carte SOM 100

```
Vecteur
prototype
wᵢ
110
```

```
Valuation
des liens
topologiques
vᵢ,ⱼ sur N(i)
112
```

i

```
Entrée
de
données
116
```

```
Connexions
du voisinage
N(i)
114
```

```
Représentation
état du neurone
118
```

Grille des neurones 101

---

x

Grille des neurones 101

Neurone $i = NC*x + y$

y

Lien topologique $i \to j \in \aleph(i)$

**Figure 10**

**Figure 11**

Carte SOM 100

Densité
données D$^{(i)}$
119

Vecteur
prototype
w$_i$
110

Valuation
des liens
topologiques
v$_{i,j}$ sur $\aleph$ (i)
112

i

Entrée
de
données
116

Connexions
du voisinage
N(i)
114

Représentation
état du neurone
118

Grille des neurones 101

101

102
103

106

105

104

**Figure 12**

Espace réel 126

ID – Dét
120

Section stockage
130

ID -ét
122

ID -ét
124

Section prétraitement
132

Section intégration 134

Section prétraitement
136

Section visualisation 140

Section classification 138

**Figure 13**

Client 142

Requête
145

Marqueur
147

Site Web 144

url 146

Section intégration
150

Serveur de marqueurs
148

Section
Prétraitement 152

Section
classification 154

Section
représentation 156

**Figure 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KOHONEN.** Self-organising maps. Springer, 2001
- **WARD JOE H.** Hierarchical Grouping to Optimize an Objective Function. *Journal of the American Statistical Association,* 1963, vol. 58 (301), 236-244
- **KOHONEN TEUVO.** Self-organizing Maps. Springer, 1984
- **KOHONEN TEUVO.** Self-organizing maps. Springer, 2001